# FASCICULE DE BREVET EUROPEEN

(11) **EP 1 792 273 B1**
(45) Date de publication et mention de la délivrance du brevet: **29.02.2012**
(21) Numéro de dépôt: 05805821.5
(22) Date de dépôt: 20.09.2005
(51) Int. Cl.: G06K 19/077

(54) **DOCUMENT IMPRIMÉ ET SYSTÈME DE COMMANDE**
GEDRUCKTES DOKUMENT UND STEUERUNGSSYSTEM
PRINTED DOCUMENT AND CONTROL SYSTEM

(30) Priorité: 23.09.2004 FR 0410071
(43) Date de publication de la demande: 06.06.2007
(73) Titulaire: YOOGET, 69006 Lyon (FR)
(72) Inventeur: LAMOULINE, Thierry, F-69160 Tassin la Demi Lune (FR)
(74) Mandataire: Rousset, Jean-Claude
(86) Numéro de dépôt international: PCT/FR2005/002327
(87) Numéro de publication internationale: WO 2006/032777

(56) Documents cités:
- WO-A-01/91045
- WO-A-03/096268
- DE-A1- 19 740 893
- DE-U1- 29 904 828
- FR-A- 2 828 953
- US-A1- 2004 074 676
- US-A1- 2004 134 994

## Description

La présente invention concerne le domaine du déclenchement d'opération dans un système informatique, tel qu'un réseau, notamment de type Internet. Par système informatique, il est entendu tout matériel informatique ou de télécommunication, tel qu'ordinateur, assistant numérique, téléphone mobile, etc.

On connaît depuis de nombreuses années le procédé d'identification par radio fréquence (RFID). Ce procédé est couramment utilisé de nos jours pour reconnaître des produits ou des objets, par exemple dans le cadre des activités de logistique, de paiement aux caisses ou encore de traçabilité. On peut se reporter aux documents disponibles sur Internet à l'adresse http : //www.techbourse.com/analyses/microcircuit electronique-20000830.htm.

On connaît également les premières encres semiconductrices pouvant permettre de réaliser des circuits électroniques par simple impression sur un document, voir US 2004/74676.

Physiquement, les étiquettes RFID se composent d'une puce et d'une antenne généralement enroulée en spires autour de la puce. Le dispositif est le plus souvent passif et l'antenne capte certaines fréquences qui lui fournissent suffisamment d'énergie pour lui permettre d'émettre à son tour son code d'identification unique. La sensibilité et la fiabilité des lectures de l'étiquette RFID dépendent principalement de la taille et de la forme de l'antenne. Certains dispositifs plus sophistiqués disposent de capteurs leur permettant d'identifier des réactions physiques comme la température, par exemple dans le domaine des produits surgelés, ou encore le franchissement d'un seuil, par exemple le niveau de liquide dans un flacon. On peut se reporter à l'article disponible sur Internet à l'adresse http://xmlfr.org/actualites/decid/031128-0001.

La présente invention vise à permettre de commander une opération informatique à partir de l'activation/désactivation d'un microcircuit.

Le document imprimé, selon l'invention, comprend au moins un microcircuit capable de générer et d'émettre un signal permettant l'identification du/des microcircuit(s) et des plots de contact en série avec le(s) microcircuit(s) pour l'activation dudit/desdits microcircuit(s). En posant un objet conducteur sur au moins deux plots de contact, on réalise un interrupteur fermé et on active ainsi le microcircuit, ce qui permet l'identification et le déclenchement d'une opération informatique déterminée associée au microcircuit. L'objet conducteur peut être métallique ou métallisé, par exemple un stylo, un boîtier de téléphone mobile ou peut être le doigt d'une personne dont l'humidité est généralement suffisante pour établir un contact électrique entre les deux plots de contact.

Le microcircuit est imprimé, notamment sur un support faisant partie du document. Le document peut comprendre une feuille de papier et une antenne. Dans le cas de pluralité de microcircuits, l'antenne est commune à au moins deux microcircuits. L'antenne est commune en ce sens qu'elle est connectée ou capable d'être connectée à au moins deux microcircuits. Le(s) microcircuit(s) est/sont une/des étiquette(s) RFID. Les plots de contact forment des interrupteurs. Chaque microcircuit est connecté à au moins un interrupteur.

Dans un mode de réalisation de l'invention, le dispositif comprend une alimentation du microcircuit. L'alimentation peut comprendre une batterie et/ou un récepteur photovoltaïque permettant de capter la lumière ambiante et de la transformer en énergie électrique qui vient alors alimenter la batterie, ou encore un condensateur, ou encore directement le microcircuit. L'alimentation peut également comprendre une antenne, associée ou non à une batterie. L'antenne peut être imprimée au moyen d'une encre conductrice.

Avantageusement, le microcircuit et l'alimentation sont reliés par une connexion formant un circuit ouvert en régime permanent et un circuit fermé pour activer ledit microcircuit. En d'autres termes, lorsque les plots de contact sont en circuit ouvert, le microcircuit n'est pas alimenté et reste donc inactif. Au contraire, lorsqu'un contact électrique est établi entre les plots de contact, le microcircuit est alimenté, ce qui permet son identification.

Dans un mode de réalisation de l'invention, la connexion comprend un interrupteur.

Avantageusement, la connexion comprend lesdits plots de contact.

Avantageusement, les plots de contact sont accessibles depuis l'extérieur. Ainsi, un utilisateur peut facilement fermer le circuit entre les plots de contact.

Dans un mode de réalisation de l'invention, les plots de contact sont isolés électriquement l'un de l'autre pour former un circuit électrique ouvert. Un plot peut être relié au microcircuit et un plot peut être relié à une antenne. En variante, les deux plots peuvent être reliés au microcircuit.

Selon l'invention, le dispositif comprend une antenne pour émettre et/ou recevoir les signaux vers ou en provenance du microcircuit. Ladite antenne peut également servir à l'alimentation en énergie électrique.

Dans un mode de réalisation de l'invention, le dispositif comprend une pluralité de microcircuits et de plots de contact associés, et au moins une antenne reliée auxdits microcircuits. Une antenne commune peut ainsi servir à une pluralité de microcircuits sélectivement alimentés et donc activés par des plots de contact prévus à cet effet. Au moins deux microcircuits peuvent comprendre une partie commune.

Dans un mode de réalisation de l'invention, les plots de contact sont constitués par deux faisceaux de lignes conductrices alternées, électriquement isolées par l'air ambiant et le papier et/ou une encre isolante et couvrant une surface déterminée du papier, disposées de telle manière que le contact d'un objet conducteur déterminé sur n'importe quelle partie de ladite surface établisse un contact électrique entre les plots.

Dans un mode de réalisation de l'invention, le document comprend une antenne formant un élément de transmission d'ordres de commande.

Le système de commande, selon un aspect de l'invention, comprend un document imprimé et un émetteur/récepteur radio apte à échanger des signaux avec le document.

Dans un mode de réalisation de l'invention, l'émetteur/récepteur est relié à un outil informatique apte à déclencher une opération informatique à réception d'une information en provenance de l'élément de transmission par l'intermédiaire de l'émetteur/récepteur.

Dans un mode de réalisation de l'invention, un élément de génération et de transmission d'ordre de commande, constitué par le microcircuit et l'antenne, est inactif en régime permanent et actif seulement lors d'une action déterminée d'un utilisateur. Ladite action peut consister à poser un objet conducteur sur une surface déterminée dudit support imprimé. Le document, qui peut être fabriqué de façon économique par impression, permet de déclencher sélectivement des opérations informatiques à une certaine distance autour desdits documents.

Dans un mode de réalisation de l'invention, un document imprimé est pourvu de texte et/ou d'image et d'un dispositif capable de générer et d'émettre un signal permettant l'identification dudit dispositif et des plots de contact pour la transmission du signal.

L'invention peut s'appliquer de façon intéressante au domaine de la vente par correspondance. De nombreux clients préfèrent consulter un catalogue sur papier plutôt que sur un écran d'ordinateur. Le détenteur du catalogue pourra choisir un produit en posant le doigt ou plus généralement tout objet conducteur sur une zone particulière du catalogue consacrée à un produit donné. La zone permettant d'établir la connexion électrique peut être une portion particulière de la zone consacrée au produit donné ou au contraire sensiblement l'ensemble de la zone. Ladite zone sera dénommée « Zone d'activation ». Lorsque le contact électrique est établi, le microcircuit qui est associé à ladite zone d'activation devient actif et peut émettre, par l'intermédiaire d'une antenne, un signal contenant un code unique. Le signal contenant le code unique peut alors être capté par un récepteur situé à proximité et relié à un ordinateur. L'ordinateur recevant le code unique va alors déclencher une opération informatique déterminée, par exemple l'ouverture d'une page Internet correspondant audit code. La page Internet peut être de contenu identique à la zone consacrée au produit donné ou peut être directement un bon de commande qui peut être rempli de façon automatique. L'invention permet donc par exemple de commander des produits sans effort à partir d'un catalogue papier plus agréable à consulter qu'un catalogue sur écran, et ce sans avoir de bon de commande à remplir manuellement ou au clavier.

La présente invention sera mieux comprise à la lecture de la description détaillée de quelques modes de réalisation pris à titre d'exemples nullement limitatifs et illustrés par les dessins annexés, sur lesquels :
- la figure 1 est une vue schématique d'un système selon un aspect de l'invention ;
- la figure 2 est une vue schématique d'une portion de document selon un aspect de l'invention ;
- la figure 3 est une variante de la figure 2 ;
- la figure 4 montre la mise en oeuvre du document de la figure 3 ;
- la figure 5 est une vue schématique d'un document selon un autre aspect de l'invention ; et
- la figure 6 montre une variante de la figure 1.

L'invention propose d'activer un microcircuit imprimé sur un document en posant un objet conducteur à un emplacement déterminé dudit document, ce qui permet, si l'on dispose d'un système de reconnaissance approprié, d'identifier ledit microcircuit et de déclencher une opération informatique déterminée associée de façon unique audit microcircuit. Le microcircuit est la puce d'une étiquette RFID.

En d'autres termes, l'invention est mise en oeuvre grâce à un appareil connecté à un outil informatique et permettant d'émettre et de réceptionner des ondes électromagnétiques, par exemple des ondes radiofréquence. On appellera cet appareil un émetteur/récepteur. Le document peut être pourvu d'une ou plusieurs encres spécifiques, visibles ou non, imprimées en couche, ou non, éventuellement séparées par une couche isolante, transparente ou non, permettant d'imprimer deux types de structure géométrique correspondant à deux fonctions, une fonction d'élément de génération et de transmission d'ordre de commande qui, à réception du signal émis par l'émetteur/récepteur, et en cas d'activation, renvoie un signal spécifique qui sera capté par l'émetteur/récepteur, et une fonction de zone d'activation qui permet, par contact avec un objet déterminé, par exemple la pointe métallique d'un stylo ou l'extrémité d'un doigt, d'activer un élément de génération et de transmission d'ordre de commande déterminé.

L'élément de génération et de transmission d'ordre de commande comprend une antenne et un microcircuit connectés électriquement entre eux. Le microcircuit peut être un transpondeur. L'antenne est destinée à recevoir un signal électromagnétique déterminé émis par un émetteur et transmettre celui-ci au microcircuit auquel ladite antenne est connectée. Le microcircuit, en réponse à un signal spécifique émis par l'émetteur/récepteur et capté par l'antenne, émet à destination de l'antenne un signal déterminé, également appelé « signature ». L'antenne transmet à un récepteur le signal électromagnétique déterminé envoyé par le micro-circuit en réponse au signal reçu.

Dans ce mode de réalisation, les éléments de génération et de transmission d'ordre de commande ne sont pas destinés, lorsqu'ils sont en présence d'un émetteur/récepteur approprié, à recevoir et à réémettre lesdits signaux en permanence et tous ensembles, mais à n'émettre/recevoir le signal qu'individuellement lorsqu'un opérateur les active. De ce fait, les contraintes techniques sont tout à fait différentes des contraintes habituelles rencontrées par exemple dans le domaine des étiquettes RFID, notamment la reconnaissance par le récepteur d'un ensemble de signatures émises simultanément par un grand nombre d'étiquettes RFID et la résolution de problématiques d'interaction d'antennes d'étiquettes RFID entre elles, par exemple dans le cas d'un empilement d'étiquettes RFID.

Au contraire, l'activation d'un élément de génération et de transmission d'ordre de commande particulier en posant un objet conducteur sur une partie déterminée d'un document permet de s'affranchir des problèmes ci-dessus et offre une communication entre l'élément de génération et de transmission d'ordre de commande et l'émetteur/récepteur à une distance comprise dans une fourchette définie par les caractéristiques des antennes. Ainsi, un document est imprimé avec un nombre quelconque d'éléments de génération et de transmission d'ordre de commande constitués d'un microcircuit et d'une antenne. Chacun de ces éléments de génération et de transmission d'ordre de commande est unique, au sens où, lorsque ledit élément de génération et de transmission d'ordre de commande est actif, il retourne à un émetteur/récepteur avec lequel il est compatible, un signal unique, en réponse au signal qu'il reçoit de l'émetteur/récepteur. Le signal unique est également appelé « signature». Il existe donc une bijection entre les éléments de génération et de transmission d'ordre de commande et leur signature. Chaque élément de génération et de transmission d'ordre de commande est lié à une ou plusieurs zones d'activation imprimées sur le document.

Par ailleurs, une outil informatique est équipé d'un émetteur/récepteur qui émet et réceptionne des ondes électromagnétiques en permanence. L'émetteur/récepteur est compatible avec les éléments de génération et de transmission d'ordre de commande présents dans le document, en ce sens que les ondes électromagnétiques qu'il émet sont captées par les éléments de génération et de transmission d'ordre de commande et qu'un élément de génération et de transmission d'ordre de commande activé retourne vers ledit émetteur/récepteur sa signature sous la forme d'un signal qui est reconnu par l'émetteur/récepteur. Le document doit être placé dans la zone de fonctionnement de l'émetteur/récepteur, de l'ordre de quelques centimètres à quelques mètres. Par défaut, en l'absence de contact approprié sur une zone d'activation associée à un élément de génération et de transmission d'ordre de commande, aucun des éléments de génération et de transmission d'ordre de commande du document n'est actif. L'émetteur/récepteur ne reçoit aucun signal en retour des ondes qu'il émet. Lorsqu'un utilisateur effectue un contact, avec un objet conducteur, sur une zone d'activation imprimée sur le document, le microcircuit associé à la zone d'activation est instantanément activé. Cette activation se traduit par l'émission par l'intermédiaire de l'antenne à laquelle ledit microcircuit est associé, de la signature du microcircuit en réponse au signal émis par l'émetteur/récepteur. La signature captée par l'émetteur/récepteur est alors interprétée, soit par l'émetteur/récepteur lui-même, soit par un outil informatique auquel ledit émetteur/récepteur est connecté, afin de déclencher une opération informatique déterminée. Avantageusement, la signature correspond, de manière univoque, à une instruction informatique déterminée, enregistrée dans une base de données en association .avec un identifiant contenu dans la signature. Lorsque la signature est décodée par l'outil informatique, celui-ci met alors en oeuvre l'instruction informatique déterminée.

L'opération informatique associée peut consister en l'ouverture d'un fichier sur l'outil informatique auquel l'émetteur/récepteur est connecté, le fichier étant présent sur l'outil informatique lui-même ou sur un réseau informatique auquel l'outil informatique est connecté. L'opération informatique associée peut consister à la saisie, dans un champ de saisie actif à l'écran de l'outil informatique, d'une chaîne de caractères associée, de manière univoque, à la signature du microcircuit.

Dans un autre mode de réalisation de l'invention, l'outil informatique est un téléphone et l'opération informatique associée consiste en la composition automatique d'un numéro de téléphone, associée ou non à la transmission d'un identifiant déterminé. L'adresse du fichier, ou l'instruction informatique, ou le numéro de téléphone, et éventuellement l'identifiant associé, peuvent être codés directement dans le microcircuit. Ainsi, la simple interprétation de la signature permet de déclencher l'opération informatique associée, sans qu'il soit nécessaire d'utiliser une base de données intermédiaire.

Dans un mode de réalisation de l'invention, la signature contient plusieurs codes, un de ces codes correspondant à l'activation sur l'outil informatique d'une application informatique particulière, un autre de ces codes correspondant à une instruction particulière de ladite opération informatique, et un autre de ces codes correspondant à un identifiant déterminé exploitable par l'instruction informatique.

Dans un mode de réalisation de l'invention, un code contenu dans la signature permet de déterminer avec quel type d'outil informatique la signature est compatible. Par exemple, dans le cas où plusieurs outils informatiques, équipés du système, se trouvent dans le périmètre d'émission et de réception d'un document, ce code peut permettre de déclencher une opération sur l'un de ces outils, par exemple un ordinateur, mais par sur les autres, par exemple des téléphones.

Dans un mode de réalisation de l'invention, un document contient une pluralité de microcircuits, chaque microcircuit étant caractérisé par sa signature. Chaque microcircuit est associé à une ou plusieurs zones d'activation. Le système permet, lorsque l'utilisateur pose un objet conducteur sur une zone d'activation, de n'activer que le microcircuit associé à cette zone, parmi l'ensemble des microcircuits du document, permettant ainsi de déterminer avec précision la signature et de mettre en oeuvre l'instruction associée.

Dans un mode de réalisation de l'invention, la zone d'activation forme un interrupteur électrique entre le microcircuit et l'antenne. Par défaut, l'interrupteur est ouvert, aucun signal électrique ne circulant entre le microcircuit et l'antenne. Le microcircuit ne reçoit donc aucun signal et n'en émet aucun. L'élément de génération et de transmission d'ordre de commande constitué par le microcircuit et l'antenne est inactif. Lorsqu'un utilisateur crée un contact, au moyen d'un objet déterminé, sur la zone d'activation, ladite zone se comporte alors comme un interrupteur fermé entre l'antenne et le microcircuit. Si l'antenne capte un signal approprié en provenance d'un émetteur, ledit signal peut alors être transmis au microcircuit qui réagit en retournant à l'antenne un signal déterminé en réponse au signal reçu, l'antenne émettant ce signal vers le récepteur. Le délai nécessaire à cette opération, de l'ordre de quelques centièmes de seconde, est négligeable par rapport à la durée de la pression de l'objet sur le document. Pendant ce contact, le microcircuit est actif.

Dans un mode de réalisation de l'invention, la zone d'activation est constituée par deux structures imprimées au moyen d'une encre électriquement conductrice. En tous points de la zone d'activation, la distance entre les deux structures est au moins égale à la distance minimale nécessaire pour que lesdites structures soient électriquement isolées par le papier et l'air ambiant, et au plus égaie à la distance maximale admissible pour que lesdites structures soient électriquement connectées par le contact de l'objet conducteur déterminé.

La zone d'activation peut consister en deux lignes imprimées, de tracé quelconque, qui ne se rejoignent ni ne se coupent à aucun moment et situées l'une par rapport à l'autre entre une distance minimale et une distance maximale vérifiant les exigences ci-dessus.

Dans un autre mode de réalisation de l'invention, la zone d'activation est constituée par deux faisceaux de lignes imprimées, de tracé quelconque, chaque ligne d'un ensemble ne rejoignant ni ne coupant à aucun moment aucune ligne de l'autre ensemble, lesdits ensembles étant, en tous points de la zone d'activation, situés l'un par rapport à l'autre à une distance telle que les exigences ci-dessus soient satisfaites. Cette configuration offre deux avantages. Le contact étant établi par l'intermédiaire de faisceaux de lignes, l'interruption d'une ligne conductrice ne suffit pas à rendre inopérant le système. L'ensemble des lignes peut recouvrir une surface aussi étendue qu'il est nécessaire, rendant ainsi active une portion du document de taille quelconque, par exemple la surface complète d'une photographie. L'objet utilisé pour établir le contact électrique sur la zone d'activation peut être l'extrémité d'un doigt de l'opérateur. En condition normale, la résistance électrique de la peau est très inférieure à celle du papier et peut donc être considérée comme conductrice tandis que le papier est isolant. En condition de sécheresse élevée de la peau, il pourra s'avérer préférable d'utiliser un objet conducteur, tel que la pointe métallique d'un stylo.

Dans un mode de réalisation de l'invention, plusieurs microcircuits sont reliés à une même antenne, ce qui permet de réduire le nombre d'antennes et d'optimiser les caractéristiques de l'antenne imprimée. On peut imposer qu'un microcircuit et un seul à la fois, à un instant donné, soit relié à l'antenne. Cette configuration est particulièrement avantageuse en terme de fonctionnement du système. En effet, la capacité d'émission et de réception d'une antenne est globalement proportionnelle à la surface englobée par les spires de l'antenne. Cette surface est égale au produit entre la surface moyenne d'une spire et le nombre de spires. Ainsi, plus la surface moyenne d'une spire est importante, plus grande est la capacité d'émission et de réception de l'antenne. Il est donc intéressant de disposer d'antennes dont les spires englobent la surface la plus importante possible. Dans le cadre d'un document à imprimer, la surface la plus importante est égale à la surface de la page du document lui-même. Une antenne standard d'étiquette RFID occupe en général un carré de 5 cm de côté, soit une surface environ vingt trois fois inférieure à celle d'une page de format A4. En première approximation, une antenne faisant le tour d'une page de format A4 sera donc vingt trois fois plus efficace, à nombre de spires égal, qu'une antenne d'étiquette RFID standard. Il est donc avantageux d'imprimer l'antenne sur le pourtour d'une page du document et de relier chaque microcircuit par l'intermédiaire d'une ou plusieurs zones d'activation à ladite antenne.

Dans un mode de réalisation de l'invention, l'insertion des microcircuits, des zones d'activation, de la ou des antennes, ainsi que des liaisons entre ces éléments, est réalisée à l'aide d'un système logiciel qui permet de définir les zones d'activation d'un document, de créer le fichier de chaque zone d'activation et de l'insérer dans le fichier du document, de créer automatiquement le fichier des microcircuits à imprimer et les insérer automatiquement dans le fichier du document, de créer automatiquement les fichiers de la ou des antennes à imprimer et les insérer dans le fichier du document, d'associer à une ou plusieurs zones d'activation un microcircuit en définissant automatiquement les chemins de liaison entre les microcircuits, les zones d'activation et les antennes, et de rendre le fichier utilisable pour l'impression à l'aide des encres adéquates.

Dans un autre mode de réalisation de l'invention, on utilise l'objet conducteur pour amplifier le signal reçu et émis par l'antenne associée au microcircuit. Les plots de contact ne constituent plus un interrupteur, mais la base d'une antenne externe.

Sur un document, est imprimé au moins un élément de génération et de transmission d'ordre de commande constitué par un microcircuit relié à une antenne imprimée. L'antenne est réalisée de telle façon que lorsqu'elle est située à une distance de l'émetteur/récepteur comprise dans une plage de distance déterminée, le signal transmis par l'antenne au microcircuit à réception de celui émis par l'émetteur et/ou celui transmis par l'élément de génération et de transmission d'ordre de commande au récepteur, est trop faible pour être capté et interprété par le destinataire, élément de génération et de transmission d'ordre de commande ou récepteur. Lorsqu'un utilisateur pose un objet conducteur au contact de l'antenne, ledit objet et/ou le corps de l'utilisateur constituent une antenne électromagnétique, ce qui a pour effet d'amplifier le signal reçu et/ou transmis par l'élément de génération et de transmission d'ordre de commande de manière suffisante pour que le signal ainsi reçu et/ou émis soit exploitable. Ainsi, la zone d'activation d'un élément de génération et de transmission d'ordre de commande est constituée par son antenne elle-même.

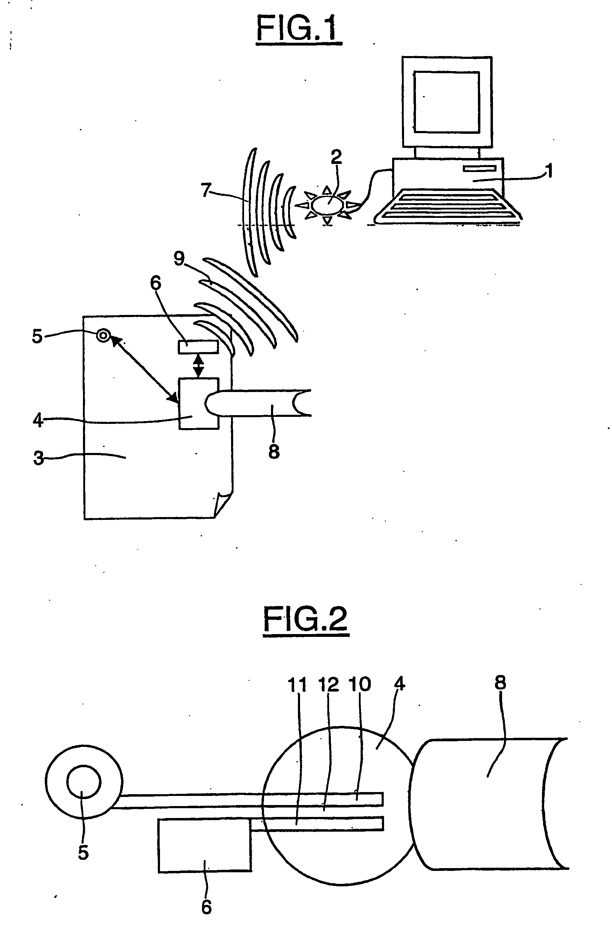

Comme on peut le voir sur la figure 1, un outil informatique 1, par exemple un ordinateur comprenant une unité centrale, un écran et un clavier, est relié à un émetteur/récepteur 2. La liaison est ici filaire. Bien entendu, on pourrait prévoir une liaison par ondes infrarouges, électromagnétiques, ou autre. Un document 3, par exemple une feuille de papier, a reçu une impression de microcircuit 5 et d'antenne 6, et de zone d'activation 4 destinée à rendre actif le microcircuit 5 lorsque ladite zone d'activation est touchée par un objet conducteur. Le microcircuit 5 et l'antenne 6 constituent un circuit permettant, lorsqu'il est activé et soumis à une onde électromagnétique en provenance de l'émetteur/récepteur 2, d'émettre à son tour une signature déterminée captée par l'émetteur/récepteur 2. Ce document peut recevoir un nombre quelconque de microcircuits 5, de zones d'activation 4 et d'antennes 6.

Lorsqu'un utilisateur du système active l'émetteur/récepteur 2, par exemple au moyen d'une commande effectuée sur l'outil informatique 1, ledit émetteur/récepteur 2 émet un signal électromagnétique 7. Le document 3 se trouve dans le périmètre d'émission et de réception de l'émetteur/récepteur 2, c'est-à-dire généralement à une distance comprise entre quelques centimètres et quelques mètres. La zone d'activation 4 est formée par des plots de contact. En l'absence de contact conducteur, la zone d'activation 4 constitue un interrupteur ouvert entre le microcircuit 5 et l'antenne 6. Le microcircuit imprimé sur le document 3 est donc inactif. Lorsqu'un utilisateur pose un objet conducteur 8 sur la zone d'activation 4 imprimée sur le document 3, la zone d'activation 4 constitue alors un interrupteur fermé entre le microcircuit 5 qui lui est associé et l'antenne 6. Le microcircuit 5 reçoit alors le signal 7 en provenance de l'émetteur/récepteur 2 capté par l'antenne 6. Le microcircuit 5 émet en réponse au signal 7 et par l'intermédiaire de l'antenne 6, un signal 9 contenant un code déterminé ou signature. Si le document 3 se trouve dans le périmètre d'émission et de réception de l'émetteur/récepteur 2, l'émetteur/récepteur 2 capte le signal 9 et transmet la signature à l'outil informatique 1 qui déclenche l'opération déterminée associée à la signature.

Comme on peut le voir sur la figure 2, une zone d'activation 4, un microcircuit 5 et une antenne 6 sont imprimés sur un document. Le microcircuit 5 est relié électriquement à la zone d'activation 4. L'antenne 6 est reliée électriquement à la zone d'activation 4. La zone d'activation 4 comprend deux lignes conductrices 10 et 11 imprimées au moyen d'une encre électriquement conductrice et séparées en tous points par une zone isolante 12 constituée par le papier du document et l'air ambiant. En l'absence de contact avec un objet extérieur conducteur, la zone d'activation 4 forme un interrupteur ouvert. Il n'y a donc pas de liaison électrique entre le microcircuit 5 et l'antenne 6. Le microcircuit est inactif. Lorsqu'un utilisateur pose un objet conducteur approprié 8 sur la zone d'activation 4, le contact est établi entre les deux lignes conductrices 10 et 11. La zone d'activation 4 forme un interrupteur fermé entre le microcircuit 5 et l'antenne 6. Le microcircuit est activé.

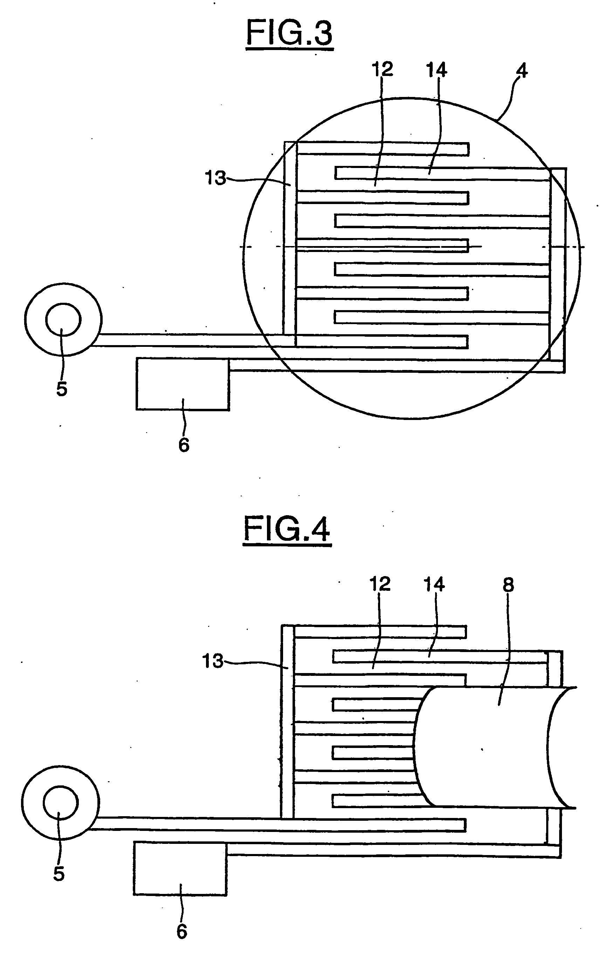

Comme on peut le voir sur la figure 3, la zone d'activation 4 comprend deux faisceaux 13 et 14 de lignes imprimées au moyen d'une encre électriquement conductrice séparée par une zone isolante 12 constituée par le papier du document et l'air ambiant. Le fonctionnement de la zone d'activation 4 est similaire à celui illustré sur la figure 2.

En se reportant à la figure 4, on voit que l'objet conducteur 8 permet de court-circuiter les lignes conductrices 13 et 14 et de fermer le circuit électrique entre le microcircuit 5 et l'antenne 6.

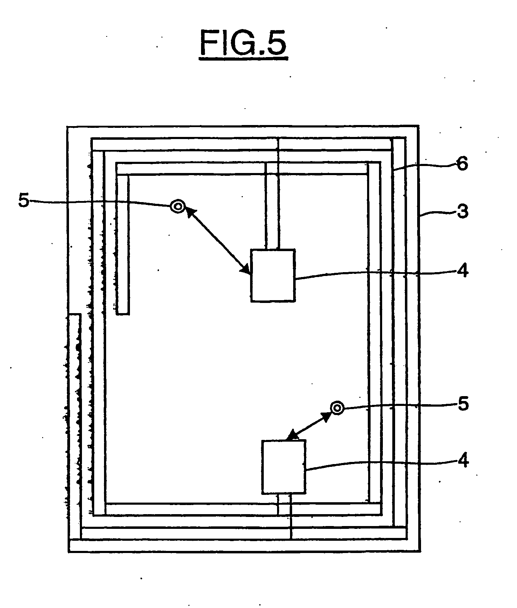

Dans le mode de réalisation illustré sur la figure 5, le document 3 a été pourvu d'une antenne 6, de deux microcircuits 5 et de deux zones d'activation 4. Chaque microcircuit 5 est relié à une zone d'activation 4. Les deux zones d'activation 4 sont reliées à l'antenne unique 6. L'antenne 6 a été formée sur le pourtour du document 3, de façon que la surface encadrée par les spires de ladite antenne 6 soit la plus grande possible. Le fonctionnement est similaire à celui décrit précédemment. En l'absence d'objet conducteur posé sur les zones d'activation 4, lesdites zones d'activation 4 forment des interrupteurs ouverts. Les microcircuits sont inactifs. Lorsqu'un utilisateur pose un objet conducteur sur une zone d'activation 4, le contact électrique est établi entre le microcircuit 5 associé à la zone d'activation 4 et l'antenne 6. Le microcircuit est ainsi activé et émet sa signature par l'intermédiaire de l'antenne commune 6. Le fonctionnement est identique si l'autre zone d'activation 4 est activée.

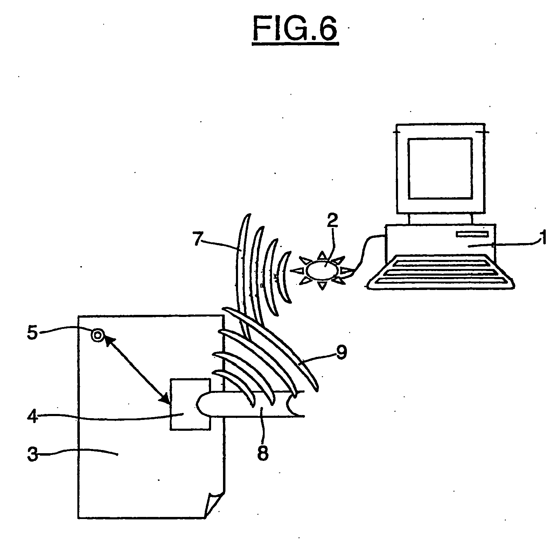

Dans le mode de réalisation illustré sur la figure 6, l'outil informatique 1 et l'émetteur/récepteur 2 sont semblables à ceux illustrés sur la figure 1. Le document 3 est pourvu de deux types de zones actives, une zone d'activation 4 et un microcircuit 5 reliés électriquement. La zone d'activation 4 est destinée, lorsqu'elle est touchée par un objet conducteur déterminé, à constituer l'antenne associée au microcircuit pour former un élément de génération et de transmission d'ordre de commande. Le microcircuit 5 permet, lors de l'activation, d'émettre une signature en réponse à une onde électromagnétique en provenance de l'émetteur/récepteur 2, sous la forme d'une signature. En l'absence de contact conducteur, la zone d'activation 4 constitue une antenne insuffisante pour transmettre le signal provenant de l'émetteur/récepteur 2 au microcircuit 5 ou provenant du microcircuit 5 vers l'émetteur/récepteur 2. Les éléments de génération et de transmission d'ordre de commande constitués par le microcircuit 5 et la zone d'activation 4. du document 3, sont donc inactifs. Lorsque l'utilisateur pose un objet conducteur 8, par exemple un doigt, sur la zone d'activation 4 imprimée sur le document 3, le système formé par la zone d'activation 4 et l'objet conducteur 8, par exemple le corps humain, constitue alors une antenne d'une capacité d'émission/réception électromagnétique sensiblement supérieure à celle de la zone d'activation 4 seule. Le microcircuit 5 reçoit alors le signal 7 en provenance de l'émetteur/récepteur 2 capté par l'antenne formée à la fois par l'objet conducteur 8 et la zone d'activation 4. Le microcircuit 5 émet vers la zone d'activation 4 en réponse au signal 7, un signal 9 contenant un code ou signature du microcircuit. Le signal 9 est émis par le système constitué de la zone d'activation 4 et de l'objet conducteur 8. Si le document 3 se trouve dans le périmètre de réception de l'émetteur/récepteur 2, l'émetteur/récepteur 2 capte le signal 9 et transmet la signature à l'outil informatique 1 qui déclenche l'opération déterminée associée à la signature.

L'invention permet donc une utilisation conviviale et simplifiée d'un catalogue en offrant le confort d'un catalogue sur support papier et la facilité de commande fournie par un catalogue affiché à l'écran d'un outil informatique. L'utilisateur peut donc déclencher une opération informatique, par exemple le remplissage d'un bon de commande, simplement en touchant du doigt une photographie de l'objet qu'il souhaite commander.

## Revendications

1. Document imprimé (3), comprenant une pluralité de microcircuits (5) capable de générer et d'émettre un signal permettant l'identification des microcircuits (5) et des plots de contact en série avec les microcircuits (5) pour l'activation desdits microcircuits (5),
**caractérisé par le fait que** les microcircuits sont imprimés et
**par le fait que** le document comprend une feuille de papier et une antenne commune à au moins deux microcircuits, les microcircuits étant des étiquettes RFID, les plots de contact formant des interrupteurs, chaque microcircuit étant connecté à au moins un interrupteur.

2. Document imprimé (3), comprenant un microcircuit (5) capable de générer et d'émettre un signal permettant l'identification du microcircuit (5) et des plots de contact en série avec le microcircuit (5) pour l'activation dudit microcircuit (5),
**caractérisé par le fait que** le microcircuit est imprimé, et
**par le fait que** le document comprend une feuille de papier et une antenne, le microcircuit étant une étiquette RFID, les plots de contact formant des interrupteurs, le microcircuit étant connecté à au moins un interrupteur.

3. Document selon l'une quelconque des revendications précédentes, **caractérisé par le fait qu'**il comprend une alimentation du microcircuit.

4. Document selon la revendication 3, **caractérisé par le fait que** l'alimentation comprend une batterie.

5. Document selon la revendication 3, **caractérisé par le fait que** l'alimentation comprend une antenne (6).

6. Document selon la revendication 3, **caractérisé par le fait que** l'antenne est imprimée au moyen d'une encre conductrice.

7. Document selon la revendication 3, **caractérisé par le fait que** l'alimentation comprend un récepteur photovoltaïque.

8. Document selon la revendication 1, **caractérisé par le fait que** les microcircuits et l'alimentation sont reliés par une connexion formant un circuit ouvert en régime permanent, et un circuit fermé pour activer lesdits microcircuits.

9. Document selon la revendication 2, **caractérisé par le fait que** le microcircuit et l'alimentation sont reliés par une connexion formant un circuit ouvert en régime permanent, et un circuit fermé pour activer ledit microcircuit.

10. Document selon la revendication 8 ou 9, **caractérisé par le fait que** la connexion comprend un interrupteur.

11. document selon la revendication 8 ou 9, **caractérisé par le fait que** la connexion comprend lesdits plots de contact.

12. Document selon l'une quelconque des revendications précédentes, **caractérisé par le fait qu'**il comprend une antenne (6) pour émettre et/ou recevoir des signaux vers ou en provenance du/des microcircuit(s).

13. Document selon l'une quelconque des revendications précédentes, **caractérisé par le fait que** les plots de contact sont accessibles depuis l'extérieur.

14. Document selon l'une quelconque des revendications précédentes, **caractérisé par le fait que** les plots de contact sont isolés électriquement l'un de l'autre pour former un circuit électrique ouvert.

15. Document selon l'une quelconque des revendications 1, 3 à 8 et 10 à 14, **caractérisé par le fait qu'**il comprend une pluralité de microcircuits et de plots de contact associés et une antenne reliée auxdits microcircuits.

16. Document selon l'une quelconque des revendications 1 à 15, **caractérisé par le fait que** les plots de contact sont constitués par deux faisceaux (13, 14) de lignes conductrices alternées, électriquement isolées par l'air ambiant et le papier et/ou une encre isolante et couvrant une surface déterminée du papier, disposées de telle manière que le contact d'un objet conducteur déterminé sur n'importe quelle partie de ladite surface établisse un contact électrique entre les plots.

17. Système de commande comprenant un document selon l'une quelconque des revendications précédentes, **caractérisé par le fait qu'**il comprend un émetteur/récepteur radio (2) apte à échanger des signaux avec le document (3).

18. Système selon la revendication 17, **caractérisé par le fait que** l'émetteur/récepteur (2) est relié à un outil informatique (1) apte à déclencher une opération informatique à réception d'une information en provenance d'un élément de génération et de transmission d'ordre de commande formé par un microcircuit et une antenne par l'intermédiaire de l'émetteur/récepteur.

19. Système selon la revendication 18, **caractérisé par le fait que** le microcircuit est inactif en régime permanent et actif seulement lors d'une action déterminée d'un utilisateur.

20. Système de génération d'un document selon l'une quelconque des revendications 1 à 16, **caractérisé par le fait qu'**il comprend un programme de commande stocké dans une mémoire, ledit programme étant apte à permettre à un utilisateur de définir les zones d'activation d'un document, à créer le fichier de chaque zone d'activation et à l'insérer dans le fichier du document, à créer automatiquement le fichier des microcircuits à imprimer et les insérer automatiquement dans le fichier du document, à créer automatiquement les fichiers de la ou des antennes à imprimer et les insérer dans le fichier du document, à associer à une ou plusieurs zones d'activation un microcircuit en définissant automatiquement les chemins de liaison entre les microcircuits, les zones d'activation et les antennes, et à rendre le fichier utilisable pour l'impression à l'aide des encres adéquates pour réaliser l'insertion des microcircuits, des zones d'activation, de la ou des antennes, ainsi que des liaisons entre ces éléments.

21. Système selon l'une quelconque des revendications 17 à 20, **caractérisé par le fait qu'**une signature de microcircuit contient plusieurs codes, un de ces codes correspondant à l'activation sur l'outil informatique d'une application informatique particulière, un autre de ces codes correspondant à une instruction particulière de ladite opération informatique, et un autre de ces codes correspondant à un identifiant déterminé exploitable par l'instruction informatique.

## Claims

1. Printed document (3), comprising a plurality of microcircuits (5) capable of generating and transmitting a signal that allows identification of the microcircuits (5) and contact studs in series with the microcircuits (5) for the purpose of activating said microcircuits, **characterised in that** the microcircuits are printed and **in that** the document comprises a sheet of paper and an aerial common to at least two microcircuits, the microcircuits being RFID tags, the contact studs forming switches, and each microcircuit being connected to at least one switch.

2. Printed document (3), comprising a microcircuit (5) capable of generating and transmitting a signal that allows identification of the microcircuit (5) and contact studs in series with the microcircuit (5) for the purpose of activating said microcircuit, **characterised in that** the microcircuit is printed and **in that** the document comprises a sheet of paper and an aerial common to at least two microcircuits, the microcircuit being an RFID tag, the contact studs forming switches, and the microcircuit being connected to at least one switch.

3. Document according to any one of the preceding claims, **characterised in that** it comprises a power supply to the microcircuit.

4. Document according to claim 3, **characterised in that** the power supply comprises a battery.

5. Document according to claim 3, **characterised in that** the power supply comprises an aerial (6).

6. Document according to claim 3, **characterised in that** the aerial is printed using a conductive ink.

7. Document according to claim 3, **characterised in that** the power supply comprises a photovoltaic receiver.

8. Document according to claim 1, **characterised in that** the microcircuits and the power supply are connected by a connection that forms a steady-state open circuit, and a closed circuit for activating the microcircuits.

9. Document according to claim 2, **characterised in that** the microcircuit and the power supply are connected by a connection that forms a steady-state open circuit, and a closed circuit for activating the microcircuit.

10. Document according to claim 8 or 9, **characterised in that** the connection comprises a switch.

11. Document according to claim 8 or 9, **characterised in that** the connection comprises the said contact studs.

12. Document according to any one of the preceding claims, **characterised in that** it comprises an aerial (6) for transmitting signals to and/or receiving signals from the microcircuit(s).

13. Document according to any one of the preceding claims, **characterised in that** the contact studs are accessible from outside.

14. Document according to any one of the preceding claims, **characterised in that** the contact studs are electrically insulated from one other to form an open electric circuit.

15. Document according to any one of the preceding claims, **characterised in that** it comprises a plurality of microcircuits and associated contact studs and an aerial connected to said microcircuits.

16. Document according to any one of claims 1 to 15, **characterised in that** the contact studs are made up of two bundles (13, 14) of alternate conductive lines, electrically insulated by the ambient air and the paper and/or an insulating ink and covering a specified area of the paper, arranged such that the contact of a conductive object detected on any part of said area establishes an electrical contact between the studs.

17. Control system comprising a document according to any one of the preceding claims, **characterised in that** it comprises a radio transmitter/receiver (2) capable of exchanging signals with the document (3).

18. System according to claim 17, **characterised in that** the transmitter/receiver (2) is connected to a data processing tool (1) adapted to trigger a data processing operation on receiving a data item from a command generating and transmitting element formed by a microcircuit and an aerial via the transmitter/receiver.

19. System according to claim 18, **characterised in that** the microcircuit is inactive in steady state and active only when a user carries out a deliberate action.

20. System for generating a document according to any one of claims 1 to 16, **characterised in that** it comprises a control programme stored in a memory, said programme being capable of enabling a user to define the activation zones of a document, to create the file of each activation zone and insert it in the file of the document, to automatically create the file of the microcircuits that are to be printed and insert them automatically in the file of the document, to automatically create the files of the aerial or aerials to be printed and insert them in the file of the document, to associate a microcircuit with one or more activation zones while automatically defining the connecting pathways between the microcircuits, the activation zones and the aerials, and to make the file usable for printing by means of suitable inks in order to carry out the insertion of the microcircuits, the activation zones, the aerial or aerials, and the connections between these elements.

21. System according to any one of claims 17 to 20, **characterised in that** a microcircuit signature contains a number of codes, one of these codes corresponding to the activation on the data processing tool of a particular data processing application, another of these codes corresponding to a particular instruction of said data processing operation, and another of these codes corresponding to a specified identifier that can be used by the data processing instruction.

## Patentansprüche

1. Gedrucktes Dokument (3) mit einer Mehrzahl von Mikroschaltkreisen (5), die in der Lage sind, ein Signal zu erzeugen und zu emittieren, das die Identifikation der Mikroschaltkreise (5) ermöglicht, und mit Kontaktschaltgliedern in Reihe mit den Mikroschaltkreisen (5) für das Aktivieren der Mikroschaltkreise, **dadurch gekennzeichnet, dass** die Mikroschaltkreise gedruckt sind, und dass das Dokument ein Blatt Papier und eine Antenne aufweist, die für wenigstens zwei Mikroschaltkreise gemeinsam ist, wobei die Mikroschaltkreise RFID-Etiketten sind, und die Kontaktschaltglieder Unterbrecher bilden, wobei jeder Mikroschaltkreis mit wenigstens einem Unterbrecher verbunden ist.

2. Gedrucktes Dokument (3) mit einem Mikroschaltkreis (5), der in der Lage ist, ein Signal zu erzeugen und zu emittieren, das die Identifikation des Mikroschaltkreises (5) erlaubt, und mit Kontaktschaltgliedern in Reihe mit dem Mikroschaltkreis (5), für das Aktivieren des Mikroschaltkreises, **dadurch gekennzeichnet, dass** der Mikroschaltkreis gedruckt ist, und dadurch, dass das Dokument ein Blatt Papier und eine Antenne aufweist, die für wenigstens zwei Mikroschaltkreise gemeinsam ist, wobei der Schaltkreis ein RFID-Etikett ist, wobei die Kontakte Unterbrecher bilden, wobei der Mikroschaltkreis mit wenigstens einem Unterbrecher verbunden ist.

3. Dokument nach einem der vorhergehenden Ansprüche, **dadurch gekennzeichnet, dass** es eine Versorgung des Mikroschaltkreises aufweist.

4. Dokument nach Anspruch 3, **dadurch gekennzeichnet, dass** die Energiespeisung eine Batterie aufweist.

5. Dokument nach Anspruch 3, **dadurch gekennzeichnet, dass** die Energiespeisung eine Antenne (6) aufweist.

6. Dokument nach Anspruch 3, **dadurch gekennzeichnet, dass** die Antenne mittels einer leitenden Tinte gedruckt ist.

7. Dokument nach Anspruch 3, **dadurch gekennzeichnet, dass** die Energiespeisung einen photovoltaischen Empfänger aufweist.

8. Dokument nach Anspruch 1, **dadurch gekennzeichnet, dass** die Mikroschaltkreise und die Energieversorgung durch eine Verbindung verbunden sind, die einen offenen Kreis unter Permanentbetrieb aufweist, und einen geschlossenen Kreis, um die Mikroschaltkreise zu aktivieren.

9. Dokument nach Anspruch 2, **dadurch gekennzeichnet, dass** der Mikroschaltkreis und die Energieversorgung durch eine Verbindung verbunden sind, die einen offenen Schaltkreis unter Permanentbetrieb und einen geschlossenen Schaltkreis bildet, um den Mikroschaltkreis zu aktivieren.

10. Dokument nach Anspruch 8 oder 9, **dadurch gekennzeichnet, dass** die Verbindung einen Unterbrecher aufweist.

11. Dokument nach Anspruch 8 oder 9, **dadurch gekennzeichnet, dass** die Verbindung die Kontaktschaltglieder aufweist.

12. Dokument nach einem der vorhergehenden Ansprüche, **dadurch gekennzeichnet, dass** es eine Antenne (6) zum Emittieren und/oder Empfangen von Signalen zu dem/den oder von dem/den Schaltkreis(en) aufweist.

13. Dokument nach einem der vorhergehenden Ansprüche, **dadurch gekennzeichnet, dass** die Kontaktschaltglieder von außen erreichbar sind.

14. Dokument nach einem der vorhergehenden Ansprüche, **dadurch gekennzeichnet, dass** Kontaktschaltglieder elektrisch voneinander isoliert sind, um einen offenen elektrischen Schaltkreis zu bilden.

15. Dokument nach einem der vorhergehenden Ansprüche, **dadurch gekennzeichnet, dass** es eine Mehrzahl von Mikroschaltkreisen und zugehörigen Kontaktschaltgliedern und eine Antenne aufweist, die mit den Mikroschaltkreisen verbunden ist.

16. Dokument nach einem der Ansprüche 1 bis 15, **dadurch gekennzeichnet, dass** die Kontaktschaltglieder durch zwei Bündel (13, 14) von abwechselnden leitenden Leitungen gebildet sind, die elektrisch durch die Umgebungsluft und das Papier und/oder eine isolierende Tinte isoliert sind, und eine vorbestimmte Fläche des Papier bedeckt, die derart angeordnet sind, dass der Kontakt eines leitenden Gegenstands, der auf einem jeglichen Abschnitt der Oberfläche bestimmt ist, einen elektrischen Kontakt zwischen den Kontaktschaltgliedern schafft.

17. Steuerungssystem mit einem Dokument nach einem der vorhergehenden Ansprüche, **dadurch gekennzeichnet, dass** es einen Sende-/Empfangsfunk (2) aufweist, der in der Lage ist, Signale mit dem Dokument (3) auszutauschen.

18. System nach Anspruch 17, **dadurch gekennzeichnet, dass** der Sender/Empfänger (2) mit einem Rechnerwerkzeug (1) verbunden ist, das in der Lage ist, einen Rechenvorgang zum Empfang einer Information kommend von einem Element der Erzeugung und Übertragung von Steuerbefehlen auszulösen, die durch einen Mikroschaltkreis und eine Antenne mittels des Senders/Empfängers gebildet werden.

19. System nach Anspruch 18, **dadurch gekennzeichnet, dass** der Mikroschaltkreis im Dauerbetrieb inaktiv ist und nur bei einer bestimmten Aktion eines Benutzers aktiv ist.

20. System zur Erzeugung eines Dokuments nach einem der Ansprüche 1 bis 16, **dadurch gekennzeichnet, dass** es ein Steuerungsprogramm aufweist, das in einem Speicher gespeichert ist, wobei das Programm in der Lage ist, einem Benutzer zu ermöglichen, Aktivierungszonen eines Dokuments zu definieren, die Datei einer jeden Aktivierungszone zu erzeugen und es in den Speicher des Dokuments einzubringen, automatisch den Speicher der Mikroschaltkreise zu erzeugen, zum Drucken und sie automatisch in den Speicher des Dokuments einzubringen, automatisch die Speicher der Antenne/n zu erzeugen, sie zu drucken und sie in den Speicher des Dokument einzubringen, einer oder mehrerer Aktivierungszonen einen Mikroschaltkreis zuzuordnen unter automatischem Definieren der Verbindungswege zwischen den Mikroschaltkreisen, den Aktivierungszonen und den Antennen, und den Speicher für das Drucken verwendbar zu machen mithilfe von entsprechenden Tinten, um das Einbringen der Mikroschalter der Aktivierungszonen deren Antenne oder Antennen, sowie die Verbindungen zwischen diesen Elementen zu erzeugen.

21. System nach einem der Ansprüche 17 bis 20, **dadurch gekennzeichnet, dass** eine Signatur des Mikroschaltkreises mehrere Codes enthält, wobei einer dieser Codes der Aktivierung auf dem Rechnerwerkzeug einer speziellen Rechnerapplikation, ein anderer dieser Codes einer speziellen Anweisung der Rechneroperation entspricht, und ein weiterer dieser Codes einem bestimmten Identifizierer entspricht, der durch Rechnerbefehle ausnützbar ist.
